# EUROPEAN PATENT APPLICATION

(11) **EP 0 944 122 A1**
(43) Date of publication of application: **22.09.1999**
(21) Application number: 99200837.5
(22) Date of filing: 18.03.1999
(51) Int. Cl.: H01M 2/10

(54) **Removal/attachment device for use with compact electronic device**

(30) Priority: 19.03.1998 JP 8954598
(71) Applicant: SMK Corporation, Tokyo 142 (JP)
(72) Inventor: Matsuda, Takeshi, Tokyo (JP)
(74) Representative: Quintelier, Claude

(57) **Abstract**

There is described a compact electronic device (10) to an electronic device main unit (11), the removal/attachment device including a lock section (16) formed in the compact electronic device; a lock protuberance (12) which is formed in the electronic device and which engages the lock section; a leaf spring section (27) which is formed in the electronic device main unit (11) and which can bend together with the lock protuberance (12) when being moved in a direction in which the compact electronic device (10) is removed; and a lock button (29) which prevents the bending action of the leaf spring and locks the same. The lock button (29) enables a lock protuberance (12) integrally formed with the lock button to change between a lock position where the lock protuberance faces the bending position of the leaf spring (27) and a lock release position where the lock protuberance (12) is displaced from the bending position of the leaf spring (27).

## Description

### BACKGROUND OF THE INVENTION

### Field of the Invention:

The present invention relates to a removal/attachment device for use with a compact electronic device which permits removable attachment of a compact electronic device, such as a battery, to an electronic device main unit; e.g., which permits removable attachment of a battery to a battery holder of an electronic camera or a video camera or removable attachment of an electronic camera and a video camera to a player.

### Description of the Related Art:

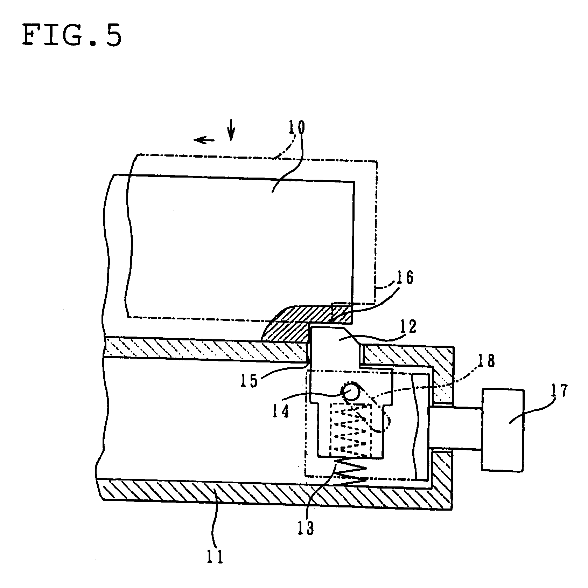

Conventionally, as shown in FIG. 5, when a compact electronic device 10 such as a battery is set on an electronic device main unit 11 such as a battery case, the compact electronic device 10 is slid in the leftward direction in the drawing from the position indicated by a chain line while a lock protuberance 12 is urged into a through hole 15 by means of the bottom of the compact electronic device 10. When a lock section 16 of the battery 10 matches a lock protuberance 12, the lock protuberance 12 is raised under the restoration force of a coil spring 13, thereby locking the battery 10.

To remove the thus-locked battery 10 from the battery case 11, a user presses a lock release button 17, thereby causing an elongated tilt hole 18 integrally formed in the lock release button 17 to travel forward. At this time, since the elongated tilt hole 18 is engaged with a projection 14 of the lock protuberance 12, the lock protuberance 12 is lowered. This enables the battery 10 to move in the rightward direction in the drawing, thereby releasing the battery 10 from a locked state.

In addition to the mechanism set forth, there have been put forward various types of mechanisms for removably attaching the compact electronic device 10 such as a battery or the like to the electronic device main unit 11 such as a battery case or the like. In most cases, there has been adopted a method in which the lock protuberance 12 is resiliently forced and retained by the coil spring 13 and is receded by means of compression of the coil spring 13 through use of the lock release button 17.

In such a conventional removal/attachment device, the lock protuberance 12 is retained by means of only the elastic force of the coil spring 13. The lock protuberance 12 is not fixedly retained, and if the coil spring 13 is released from a locked state by means of some physical shock, the compact electronic device 10, such as a battery, will be dislodged from the electronic device main unit 11.

Retaining the compact electronic device 10, such as a battery, requires at least the lock protuberance 12, the coil spring 13, and the lock release button 17, thus resulting in a large number of components.

The object of the present invention is to provide a removal/attachment device for use with a compact electronic device which requires a small number of components, enables reliable and fixed locking of the compact electronic device, and enables easy removal of the same.

### Summary of the Invention

Accordingly, according to one aspect of the present invention, there is provided a removal/attachment device which removably attaches a compact electronic device to an electronic device main unit, the removal/attachment device comprising:
a lock section formed in the compact electronic device;
a lock protuberance which is formed in the electronic device and which engages the lock section;
a leaf spring section which is formed in the electronic device main unit and which can bend together with the lock protuberance when moved in a direction in which the compact electronic device is removed; and
a lock button which prevents the bending action of the leaf spring and locks the same.

Preferably, the leaf spring is formed from a mold spring integrally formed with a compact electronic device attachment section of the electronic device main unit.

Preferably, the lock button enables a lock protuberance integrally formed with the lock button to be switched between a lock position where the lock protuberance faces the bending position of the leaf spring and a lock release position where the lock protuberance is displaced from the bending position of the leaf spring.

Preferably, a positioning spring integrally formed with the lock button is selectively engaged with a lock positioning recess or a release positioning recess of a lock button storage section formed on the electronic device main unit, thus enabling the positioning spring to be held at the lock position and at the lock release position.

When the compact electronic device is locked on the electronic device main unit and the lock button is slid, the lock protuberance travels to the lock position beneath the lower surface of the leaf spring, and the positioning spring section fits into the lock positioning recess, thus limiting downward bending action of the leaf spring. Even if an attempt is made to remove the compact electronic device from the electronic device main unit, the lock protuberance and the leaf spring cannot be bent in a downward direction, thus bringing the compact electronic device into a locked state. In this state, the compact electronic device is retained not by means of the spring characteristics but in a fixed manner, and the positioning spring section fits into the lock positioning recess to thereby limit the movement of the lock button. Consequently, the compact electronic device has substantially no chance of being dislodged from the electronic device main unit. The compact electronic device can be attached to the electronic device main unit with considerable reliability.

To remove the compact electronic device from the electronic device main unit, a tab of the lock button is slid in the direction opposite that in which it had been slid before. In association with the sliding action of the tab, the positioning spring fits into the release positioning recess section, and the lock protuberance moves away from the lock position beneath the lower surface of the leaf spring. When the user withdraws the compact electronic device 10 in a removal direction, the lock protuberance is pressed in a downward direction by means of the lock section, thereby bending the leaf spring. When the user withdraws the compact electronic device 10 further in the removal direction, the lock protuberance is disengaged from an engagement trench, thus enabling removal of the compact electronic device.

### Brief Description of the Drawings

FIG. 1 is an exploded perspective view showing an attachment/removal device for use with a compact electronic device according to one embodiment of the present invention;
FIG. 2 is a fragmentary cross-sectional view taken along line A-A shown in FIG. 3, showing a compact electronic device which is locked on an electronic device main unit through use of the attachment/removal device according to the embodiment;
FIG. 3 is a fragmentary cross-sectional view taken along line B-B shown in FIG. 2, showing a compact electronic device which is locked on an electronic device main unit through use of the attachment/removal device according to the embodiment;
FIG. 4 is a fragmentary cross-sectional view taken along line C-C shown in FIG. 2, showing a compact electronic device which is locked on an electronic device main unit through use of the attachment/removal device according to the embodiment; and
FIG. 5 is a cross-sectional view showing the principal elements of a conventional attachment/removal device for use with a compact electronic device.

### Detailed Description of the Preferred Embodiment

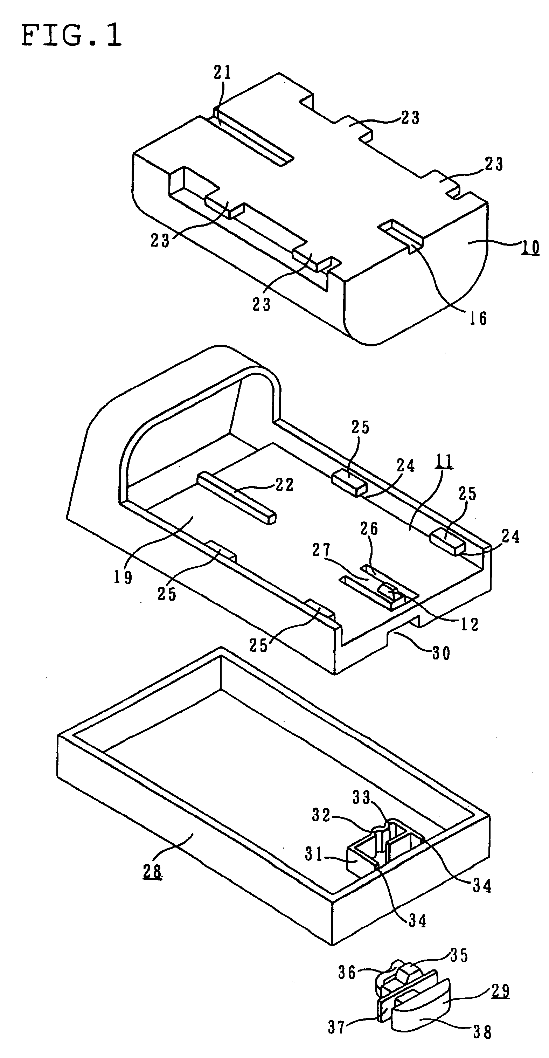

A preferred embodiment of the present invention will be described hereinbelow by reference to FIGs. 1 through 4.

Reference numeral 10 designates a compact electronic device. The following description relates to a case where the compact electronic device 10 corresponds to a removably attachable battery.

A guide trench 21 is formed in the front end portion of and along the longitudinal center of the bottom surface of the battery 10. A lock section 16 is formed in the rear end portion of the bottom surface of the battery 10 in line with the guide trench 21. A pair of lock protuberances 23 are integrally formed along each side of the bottom surface of the battery 10.

Reference numeral 11 designates an electronic device main unit. In the following description, the electronic device main unit 11 corresponds to a battery case on which the battery 10 is removably attached. The battery case 11 is integrally attached to the end of an electronic camera or a video camera together with a lower case 28, which will be described later.

A rib-like guide 22 formed so as to correspond to the guide trench 21 is provided on a battery attachment section 19 which serves as a compact electronic device attachment section of the battery case 11. Further, a lock protuberance 12 is formed so as to correspond to the lock section 16, and a slide notch 30 to be used for moving a lock button 29, which will be described later, is formed in the lower surface of the battery case 11 at the front end thereof.

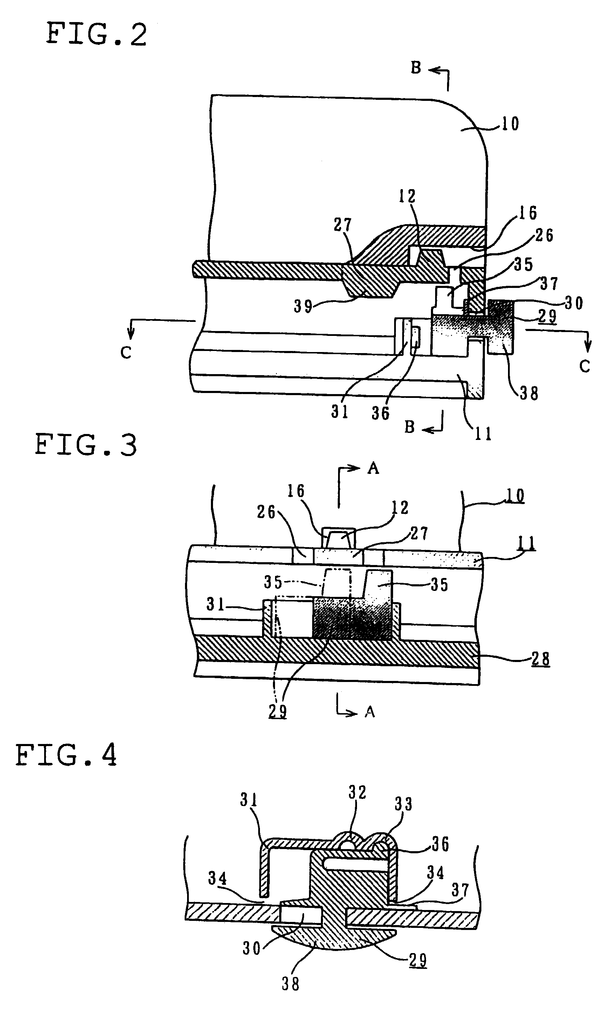

The lock protuberance 12 is integrally formed on the front end of the upper surface of a leaf spring 27. The leaf spring 27 is a mold spring which is integrally formed in the battery attachment section 19 by formation of a rectangular C-shaped notch 26. As shown in FIG. 2, a raised reinforcing section 39 is integrally formed on the reverse side of the base end of the leaf spring 27 in order to strengthen the spring force and to cause the leaf spring 27 to withstand bending and stretching action over a long period of time.

A pair of protuberances 25 are formed along each side of the battery attachment section 19, and engagement recesses 24 engaged by the lock protuberances 23 are formed in corresponding positions.

A substantially rectangular lock button housing section 31 for housing the lock button 29 is formed on the front end of the upper surface of the lower case 28. A slide trench 34 is formed between the lock button housing section 31 and the front plate. In the rear plate of the lock button housing section 31 are formed two recesses; that is, a lock positioning recess 32 and a lock release recess 33.

As shown in FIG. 4, when the user presses the lock button 29 into the lock button housing section 31, a tab 38 projects to the outside from the slide notch 30, and a slide plate 37 loosely fits into the slide trench 34. A lock protuberance 35 and a positioning spring 36 fit into the lock button storage section 31. At this time, the positioning spring 36 is integrally formed into an L-shaped form so as to assume elasticity. Accordingly, while the projection provided at the leading end of the positioning spring 36 is fitted into the release positioning recess 33, the battery 10 is reliably retained in a lock release state. In contrast, while the positioning spring 36 is fitted into the lock positioning recess 32, the battery 10 is reliably retained in a lock state.

The lock button 29 is fitted into the lock button storage section 31 of the lower case 28 having the foregoing configuration, and the battery case 11 is placed on and integrally fixed to the lower case 28 by means of screws. The battery case 11 is mounted on an electronic camera or a video camera beforehand.

When the battery 10 is set on the battery attachment section 19 of the battery case 11, the tab 38 of the lock button 29 is moved in the rightward direction in FIG. 1, thereby causing the positioning spring 36 to fit into the release positioning recess 33. At this time, the lock protuberance 35 of the lock button 29 is displaced from the lower surface of the leaf spring 27, as indicated by a solid line shown in FIG. 3; namely, a sufficient clearance is formed between the lower surface of the leaf spring 27 having the lock protuberance 12 formed thereon and the top of the lock protuberance 35.

The battery 10 is placed on the battery case 11 in such a way that the guide trench 21 and the lock section 16 face downward and match the rib-like guide 22 and the lock protuberance 12, respectively. The user fits the battery 10 into the battery case 11 by placing the battery 10 downward at the position slightly toward the battery removal direction. At this time, the lock protuberances 23 provided along each side of the battery 10 are spaced slightly away from the respective protuberances 25 of the battery case 11.

When the user presses the battery 10 in a forward directly in a slidable manner while the bottom surface of the battery 10 is in close contact with the upper surface of the battery attachment section 19, the lock protuberance 23 of the battery 10 engages the engagement recess 24 of the battery 10. Subsequently, when the user slides the tab 38 of the lock button 29 in the leftward direction in FIG. 1, the lock protuberance 35 moves to the position beneath the leaf spring section 27, as indicated by the chain line shown in FIG. 3. Further, the positioning spring 36 fits into the lock positioning recess 32, thereby limiting the downward bending action of the leaf spring 27. Even if an attempt is made to withdraw the battery 10 in a removal direction in order to remove the battery 10, neither the lock protuberance 12 nor the leaf spring 27 bend downward, bringing the battery 10 in a locked state. In this state, the battery 10 is locked not by means of the spring characteristics but in a fixed manner. Further, the positioning spring 36 fits into the lock positioning recess 32, thereby limiting the movement of the lock button 29. Thus, the battery 10 has substantially no chance of becoming dislodged from the battery case.

To remove the battery 10, the user slides the tab 38 of the lock button 29 in the rightward direction in FIG. 1, so that the positioning spring 36 fits into the release positioning recess 33. Further, the lock protuberance 35 moves from the position beneath the lower surface of the leaf spring 27. Therefore, when the user withdraws the battery 10 in the removal direction, the lock protuberance 12 is pressed in a downward direction by means of the lock section 16, thereby bending the leaf spring 27. When the user withdraws the battery 10 further in the removal direction, the lock protuberance 23 is disengaged from the engagement trench 24, thus enabling removal of the battery 10.

Although the present embodiment has been described in connection with the case where the compact electronic device 10 corresponds to a battery and the electronic device main unit 11 corresponds to a battery case, the present invention is not limited to this embodiment. The compact electronic device 10 may correspond to, for example, an electronic camera or a video camera, and the electronic device main unit 11 may correspond to, for example, a player. The present invention may apply to the compact electronic device 10 and the accessories thereof.

As has been described above, according to the first aspect of the present invention, the leaf spring is formed in the electronic device main unit. When the compact electronic device is moved in the removal direction, the leaf spring can bend together with the lock protuberance. The lock button is provided at the position where it prevents the bending action of the leaf spring. Therefore, the compact electronic device is held in a locked state not by means of the spring characteristics but in a fixed manner. Consequently, the compact electronic device has substantially no chance of being dislodged from the electronic device main unit.

According to the second and third aspects of the present invention, the leaf spring is a mold spring which is integrally formed with the compact electronic device attachment section of the electronic device main unit. The lock button can be switched between the lock position where the lock protuberance integrally formed with the lock button faces the bending position of the leaf spring and the lock release position where the lock protuberance is displaced from the bending position of the leaf spring. As a result, the attachment/removal device does not require a separate coil spring or components for locking purposes, thereby resulting in fewer components. Consequently, an inexpensive removal/attachment device can be offered.

According to the fourth aspect of the present invention, a positioning spring integrally formed with the lock button is selectively engaged with a lock positioning recess or a release positioning recess of a lock button storage section formed on the electronic device main unit, thus enabling the positioning spring to be held at the lock position and at the lock release position. The lock button engages with the lock positioning recess and the lock release positioning recess, thus limiting the movement of the lock button. The lock button has substantial no chance of becoming displaced or dislodged, thus reliably holding the electronic device in position.

## Claims

1. A compact electronic device to an electronic device main unit, the removal/attachment device comprising:
a lock section formed in the compact electronic device;
a lock protuberance which is formed in the electronic device and which engages the lock section;
a leaf spring section which is formed in the electronic device main unit and which can bend together with the lock protuberance when being moved in a direction in which the compact electronic device is removed; and
a lock button which prevents the bending action of the leaf spring and locks the same.

2. The removal/attachment device as defined in Claim 1, wherein the leaf spring is formed from a mold spring integrally formed with a compact electronic device attachment section of the electronic device main unit.

3. The removal/attachment device as defined in Claim 1 or 2, wherein the lock button enables a lock protuberance integrally formed with the lock button to change between a lock position where the lock protuberance faces the bending position of the leaf spring and a lock release position where the lock protuberance is displaced from the bending position of the leaf spring.

4. The removal/attachment device as defined in Claim 3, wherein a positioning spring integrally formed with the lock button is engaged selectively with a lock positioning recess or a release positioning recess of a lock button storage section formed on the electronic device main unit, thus enabling the positioning spring to be held at the lock position and at the lock release position.
